Europäisches Patentamt

European Patent Office

Office européen des brevets

(19)

(11) Veröffentlichungsnummer: **0 445 631 A1**

## EUROPÄISCHE PATENTANMELDUNG

(12)

(21) Anmeldenummer: **91102874.4**

(22) Anmeldetag: **27.02.91**

(51) Int. Cl.5: **F16B 13/00**

(30) Priorität: **03.03.90 DE 4006671**

(43) Veröffentlichungstag der Anmeldung:
**11.09.91 Patentblatt 91/37**

(84) Benannte Vertragsstaaten:
**AT BE CH DK ES FR GB GR IT LI LU NL SE**

(71) Anmelder: **Heuel, Wilhelm**
**Hagener Strasse 22**
**W-5962 Drolshagen(DE)**

(72) Erfinder: **Heuel, Wilhelm**
**Hagener Strasse 22**
**W-5962 Drolshagen(DE)**

(74) Vertreter: **Pürckhauer, Rolf, Dipl.-Ing.**
**Friedrich-Ebert-Strasse 27 Postfach 10 09 28**
**W-5900 Siegen 1(DE)**

(54) **Spreizdübel.**

(57) Um einen Spreizdübel aus Kunststoff zu schaffen, der eine beliebige Innenprofilierung erhalten kann, insbesondere eine solche, die beim Eindrehen einer Schraube eine gleichmäßige Spreizung auf der gesamten, auch großen Länge des Dübels (1) sicherstellt, wird der Dübel aus zwei Halbschalen (2), die am Dübel-Innenende über ein Filmscharnier (3) miteinander verbunden, in einer gemeinsamen Form gespritzt. Die Halbschalen (2) weisen eine Innenprofilierung auf, insbesondere ein Gewinde (4), das sich beim Zusammenfalten der Halbschalen (2) ergänzt. Auf einem inneren Spreizabschnitt (10) des Gewindes (4) sind die erhabenen Windungen (9) desselben jeweils abwechselnd radial zueinander versetzt. Außerdem ist der Kerndurchmesser des Innengewindes (4) kleiner als derjenige einer zugehörigen Befestigungsschraube (5).

Fig. 1

EP 0 445 631 A1

Rank Xerox (UK) Business Services

Die Erfindung bezieht sich auf einen Spreizdübel der im Oberbegriff des Patentanspruchs 1 angegebenen Gattung.

Es gibt viele Ausführungsformen von Spreizdübeln, wobei die meisten von ihnen aus Kunststoff gespritzt werden. Das Spritzen von Kunststoffdübeln wird dann problematisch oder gar unmöglich, wenn eine Innenprofilierung vorgesehen werden soll. Bei kurzen Dübeln könnte man über ein Teilstück bei Bedarf ein Innengewinde vorsehen, weil der Kern der Spritzform dann noch ausreichend gekühlt werden kann. Bei besonders langen Dübeln wird die Kühlung des Formkerns problematisch, wenn eine rationelle Herstellung der Dübel in Massenproduktion gesichert bleiben soll.

Soweit bekannt, gibt es bisher keine Kunststoffdübel mit einer speziellen Innenprofilierung. Vielmehr haben Kunststoffdübel Innenwände, in die sich Befestigungsschrauben einschneiden müssen. Sitzt der Dübel aber in einem ziemlich passend gebohrten Loch in einer Wand aus hartem Material, dann kann sich der Dübel radial nicht viel ausdehnen. Die Folge davon ist, daß das Eindrehen einer Befestigungsschraube sehr schwer wird, da die Gewindegänge der Schraube sich tiefer in das Material des Dübels einschneiden müssen. Außerdem ist es bei bekannten Kunststoffdübeln nicht möglich, daß diese auf ihrer ganzen Länge gleichmäßig gespreizt werden, was in weniger festem Mauerwerk o.dgl. einen besseren Halt gewährleisten würde.

Es gibt aus zwei Halbschalen bestehende Metalldübel, wobei die Halbschalen mit einem Gummi- oder Federdrahtring zusammengehalten werden müssen. Meistens werden diese mit einem Spreizkonus gespreizt, der eine Gewindebohrung für eine Befestigungsschraube aufweist, die den Konus in den Dübel einzieht. Auch hierbei ist eine gleichmäßige Spreizung auf der gesamten Dübellänge nicht möglich.

Der Erfindung liegt die Aufgabe zugrunde, einen Spreizdübel aus Kunststoff zu schaffen, der eine beliebige Innenprofilierung erhalten kann, insbesondere eine solche, die eine gleichmäßige Spreizung auf der gesamten Dübellänge und damit einen sicheren Halt des Dübels gewährleistet.

Grundsätzlich wird diese Aufgabe durch die Kennzeichnungsmerkmale des Patentanspruchs 1 gelöst. Zweckmäßige weitere Ausgestaltungen des erfindungsgemäßen Spreizdübels sind den Unteransprüchen zu entnehmen.

Der erfindungsgemäße Spreizdübel kann in bezug auf seine Innenprofilierung je nach Anwendungsfall sehr unterschiedlich und individuell gestaltet werden, da infolge des gemeinsamen Spritzens der beiden Halbschalen und der Möglichkeit des Zusammenfaltens derselben spritztechnisch keine Probleme bestehen, auch nicht bei sehr langen Dübeln. Die Ausbildung mit einem Innengewinde, das durch die versetzte Anordnung der erhabenen Windungen ein gleichmäßiges Spreizen der Halbschalen ermöglicht, ist die bevorzugte Ausführungsform, von der ein Ausführungsbeispiel in der Zeichnung dargestellt ist und nachfolgend unter Erläuterung weiterer Vorteile beschrieben wird. Es zeigen

Fig. 1     eine Draufsicht der aufgeklappten und zusammenhängenden Halbschalen, wie sie die Spritzform verlassen,

Fig. 2     eine dazu passende Norm-Schraube,

Fig. 3     einen stark vergrößerten Ausschnitt III aus Fig. 1,

Fig. 4     den Dübel in Seitenansicht mit zusammengefalteten Halbschalen und einem zusätzlichen Formstück für besondere Anwendungsfälle und

Fig. 5     eine Stirnansicht des Dübels in Richtung des Pfeiles V in Fig. 4, jedoch ohne Formstück.

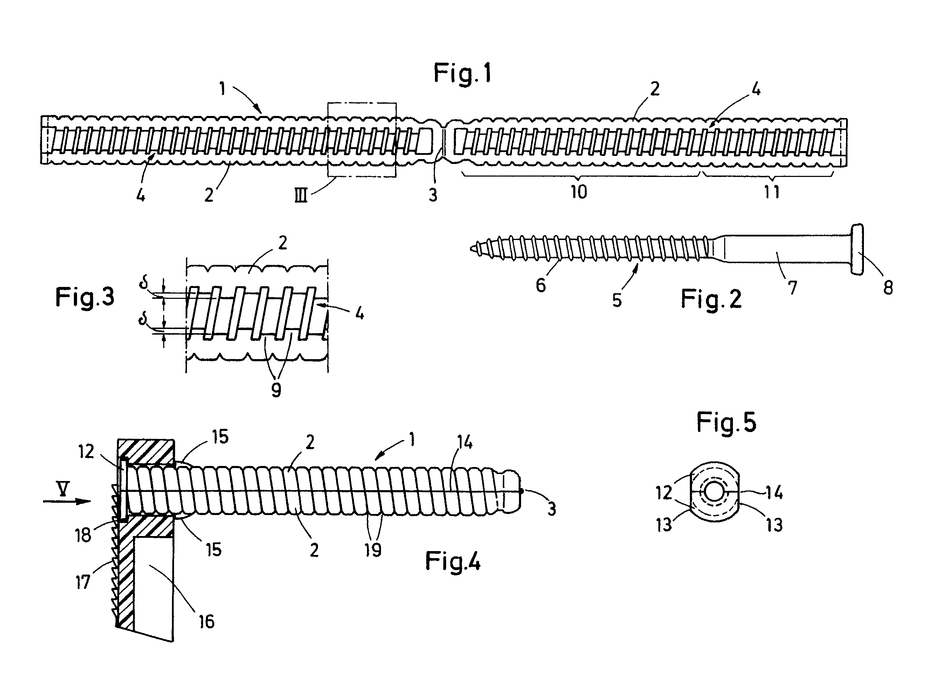

Zwei spiegelbildlich zueinander ausgebildete Halbschalen 2 eines Spreizdübels 1 sind über ein Filmscharnier 3 (Fig. 1 und 4) miteinander verbunden und können, wie Fig. 4 zeigt, zusammengefaltet werden. Beide Halbschalen 2 sind mit einer Innenprofilierung versehen, die sich im zusammengefalteten Zustand (Fig. 4) zu einem Innengewinde 4 ergänzt, in das eine Schraube 5 (Fig. 2) eingeschraubt werden kann. Die zum gezeigten Ausführungsbeispiel des Dübels 1 passende Schraube 5 hat einen Gewindeteil 6 und einen Schaft 7 sowie einen Kopf 8, in diesem Falle mit einem Kreuzschlitz (nicht sichtbar).

Damit durch das Einschrauben der Schraube 5 auch ein gleichmäßiges Spreizen des Dübels 1 bewirkt wird, sind axial benachbarte erhabene Windungen 9 des Innengewindes 4 radial um ein Maß δ zueinander versetzt, wie in dem vergrößerten Ausschnitt III der Fig. 1 in Fig. 3 veranschaulicht. Beim Eindrehen der Schraube 5 werden dadurch die Halbschalen 2 des Dübels 1 auseinandergedrückt, und zwar gleichmäßig auf der ganzen Dübellänge.

Damit dies auch für den Bereich des Dübels 1 zutrifft, in den der Schaft 7 der Schraube 5 in den Dübel 1 eindringt, ist das Innengewinde 4 in zwei Abschnitte unterteilt, und zwar in einen vorderen (inneren) längeren Spreizabschnitt 10 mit den versetzten Windungen 9 und einen hinteren (äußeren) kürzeren Schrauben-Aufnahmeabschnitt 11. Der Schrauben-Aufnahmeabschnitt 11 wird deshalb so bezeichnet, weil beim Zusammenfalten der Dübel-Halbschalen 2 bereits das vordere Ende des Gewindeteils 6 der Schraube 5 formschlüssig ohne Spreizung des Dübels 1 eingelegt werden kann. Das ergibt den Vorteil, daß der Dübel 1 mit der Schraube 5 in ein Bohrloch eingeschlagen werden kann. Aufgrund dessen kann der Dübel 1 in bezug auf das Bohrloch mit geringem Aufmaß gefertigt werden. Bei einer solch engen Passung zwischen Dübel 1 und Bohrloch wird das Einschrauben der Schraube 5 dennoch nicht wesentlich erschwert, da das Material der Windungen 9 des Dübel-Innengewindes 4 in die Gänge des Gewindeteils 6 der Schraube 5 ausweichen kann. Aus diesem Grund ist zusätzlich zu dem Versatz δ der Kerndurchmesser des Innengewindes 4 im Bereich des Spreizabschnittes 10 kleiner als der der Schraube 5.

Die Abschnitte 10, 11 des Innengewindes 4 des Dübels 1 sind in bezug auf die Schraube 5 so ausgestaltet, daß beim Eindrehen der Schraube 5 in den Dübel 1 der Gewindeteil 6 im Spreizabschnitt 10 des Innengewindes 4 die gleiche Spreizung bewirkt wie der Schaft 7 der Schraube 5 im Bereich des Schrauben-Aufnahmeabschnittes 11.

Wie insbesondere die Fig. 4 und 5 zeigen, ist jeweils eine Hälfte eines Kopfflansches 12 des Dübels 1 an das äußere Ende jeder Halbschale 2 angespritzt. Im zusammengefalteten Zustand des Dübels 1 bzw. der Halbschalen 2 nach Fig. 4 ist der Kopfflansch 12 mit seitlichen Abflachungen 13 versehen, die in Tangentialebenen zum Außenumfang des Dübels 1 und senkrecht zur Trennfuge 14 der Halbschalen 2 liegen. An den Abflachungen 13 des Kopfflansches 12 ist die Drehlage des Dübels 1 im Bohrloch erkennbar, so daß der Dübel 1 vorteilhaft so eingesetzt wird, daß die Halbschalen 2 immer oben und unten liegen und der Dübel 1 stets nach oben und unten gespreizt wird. Das ist wichtig, wenn er in Hohlkammersteine bzw. Gitterziegel eingesetzt wird. Beim Bohren des Dübelloches in solche Steine kommt es häufig vor, daß der Bohrer unglücklicherweise auf einen Steg zwischen den Hohlkammern trifft und dann unvermeidlich seitlich verschlägt. Eine seitliche Spreizung des Dübels 1 würde die lotrecht verlaufenden Stege bzw. Trennwände des Mauersteins zerbrechen, während bei einer vertikalen Spreizung des Dübels 1 diese Trennwände bzw. Stege standhalten.

Die Halbschalen 2 des Dübels 1 können widerhakenförmige Nasen 15 (Fig. 4) aufweisen, die im Abstand vom Kopfflansch 12 an die Halbschalen 2 angespritzt sind und sich senkrecht zur Ebene der Trennfuge 14 radial gegenuberliegen. Diese Nasen 15 rasten hinter ein wahlweise vorgesehenes Formstück 16 ein und arretieren dieses, nachdem es vom inneren Ende her auf den zusammengefalteten Dübel 1 aufgeschoben worden ist. Das Formstück 16, das an den der Wand abgekehrten Kanten Rastzähne 17 aufweisen kann, dient mit einem entsprechenden Gegenstück zum höhenverstellbaren Befestigen von Geräten, z.B. Heizkörpern, an einer Wand. Das Formstück 16 kann je nach Anwendungsfall auch anders gestaltet sein. Das Formstück 16 hat stirnseitig eine Ausnehmung 18 zur Aufnahme des Kopfflansches 12 des Dübels 1.

Es wurde bereits erwähnt, daß durch die Längsteilung des Dübels 1 in zwei über das Filmscharnier 3 zusammenfaltbar zusammenhängende Halbschalen die Möglichkeit besteht, den Dübel 1 mit beliebigen Innenprofilierungen zu versehen. So besteht auch die Möglichkeit, den Dübel für verstellbare Abstandhalter, z.B. für Plattenheizkörper, nur mit einem metrischen Innengewinde über ein Teilstück vom Kopfflansch 12 aus zu versehen, in das der Gewindebolzen eines scheibenförmigen Abstandhalters (nicht dargestellt) entsprechend dem gewünschten Wandabstand eines hängend befestigten Gerätes, z.B. Plattenheizkörpers, eingeschraubt wird. Da der Dübel durch einen solchen Abstandhalter nicht auf Zug beansprucht wird, ist in einem solchen Fall der Spreizabschnitt 10 des Innengewindes 4 nicht erforderlich.

Die Halbschalen 2 des Dübels 1 haben, wie üblich, eine Außenprofilierung 19, die beim gezeigten Ausführungsbeispiel gewindeartig ausgebildet ist, aber auch in der bei Dübeln allgemein üblichen Weise aus parallelen Umfangsrippen- und -rillen bestehen kann.

## Patentansprüche

1. Spreizdübel, der in zwei durch eine Befestigungsschraube spreizbare Halbschalen längsgeteilt ist und eine Außenprofilierung aufweist, dadurch gekennzeichnet, daß die beiden Halbschalen (2) in auseinandergefaltetem Zustand in einer gemeinsamen Form aus Kunststoff gespritzt, am Dübel-Innenende über ein Filmscharnier (3) miteinander verbunden sind und eine im zusammengefalteten Zustand sich ergänzende Innenprofilierung (4; 10, 11) aufweisen.

2. Spreizdübel nach Anspruch 1, dadurch gekennzeichnet, daß die Innenprofilierung ein Innengewinde (4) ist.

3. Spreizdübel nach Anspruch 2, dadurch gekennzeichnet, daß jeweils zwei axial benachbarte erhabene Windungen (9) des Innengewindes (4) radial zueinander versetzt sind.

4. Spreizdübel nach Anspruch 2 oder 3, dadurch gekennzeichnet, daß das Innengewinde (4) in einen inneren Spreizabschnitt (10) und einen äußeren Schrauben-Aufnahmeabschnitt (11) unterteilt ist, wobei nur im Bereich des Spreizabschnittes (10) die erhabenen Windungen (9) radial zueinander versetzt sind, während der Schrauben-Aufnahmeabschnitt (11) des Innengewindes (4) dem Gewindeteil (6) der Schraube (5) entspricht.

5. Spreizdübel nach Anspruch 4, dadurch gekennzeichnet, daß der Kerndurchmesser des Innengewindes (4) im Bereich des Spreizabschnittes (10) kleiner ist als der Kerndurchmesser der Schraube (5).

6. Spreizdübel nach einem der Ansprüche 1 bis 5, dadurch gekennzeichnet, daß ein an die Halbschalen (2) je zur Hälfte angespritzter Kopfflansch (12) des Dübels (1) senkrecht zur Trennfuge (14) der Halbschalen (2) abgeflacht ist (13).

7. Spreizdübel nach einem der Ansprüche 1 bis 6, dadurch gekennzeichnet, daß im Abstand vom Kopfflansch (12) des Dübels (1) widerhakenförmige Nasen (15) an die Halbschalen (2) angeformt sind.

8. Spreizdübel nach einem der Ansprüche 1 bis 7, gekennzeichnet durch ein vom Dübel-Innenende her aufschiebbares und an den Nasen (15) verrastbares Formstück (16).

9. Spreizdübel nach Anspruch 8, dadurch gekennzeichnet, daß das Formstück (16) stirnseitig eine den Dübel-Kopfflansch (12) aufnehmende Ausnehmung (18) aufweist.

Fig.1

Fig.2

Fig.3

Fig.4

Fig.5

**Europäisches Patentamt**

# EUROPÄISCHER RECHERCHENBERICHT

Nummer der Anmeldung

## EP 91 10 2874

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 813 938   (HOLDFAST FIXINGS)<br>* Anspruch 1; Figur 1 *<br>— — — | 1,2 | F 16 B 13/00 |
| A | DE-A-2 554 356   (ANKE)<br>* das ganze Dokument *<br>— — — | 1 | |
| A | DE-C-1 910 31   (OGDEN)<br>* Anspruch 1; Figur 1 *<br>— — — | 4 | |
| A | FR-A-2 417 667   (FIALA)<br>— — — — — | | |

|  | RECHERCHIERTE SACHGEBIETE (Int. Cl.5) |
|---|---|
|  | F 16 B |

Der vorliegende Recherchenbericht wurde für alle Patentansprüche erstellt

| Recherchenort | Abschlußdatum der Recherche | Prüfer |
|---|---|---|
| Berlin | 27 Mai 91 | SCHAEFFLER C.A.A. |